# EUROPÄISCHE PATENTANMELDUNG

(11) **EP 1 705 553 A2**
(43) Veröffentlichungstag der Anmeldung: **27.09.2006**
(21) Anmeldenummer: 06101369.4
(22) Anmeldetag: 07.02.2006
(51) Int. Cl.: G06F 3/033

(54) **Bedieneinrichtung**

(30) Priorität: 21.03.2005 DE 102005012939
(71) Anmelder: ROBERT BOSCH GMBH, 70442 Stuttgart (DE)
(72) Erfinder: Mueller, Ruediger, 31162, Bad Salzdetfurth (DE)

(57) **Zusammenfassung**

Es wird eine Bedieneinrichtung mit einem an einer Drehachse gelagerten Bedienrad vorgeschlagen, wobei durch ein Drehen des Bedienrades, ein Verkippen des Bedienrades und einen radialen Druck auf das Bedienrad wenigstens drei verschiedene Eingaben möglich sind.

## Beschreibung

### Stand der Technik

Die Erfindung geht aus von einer Bedieneinrichtung nach der Gattung des Hauptanspruchs. Aus der DE 100 21 065 A1 ist bereits eine Bedieneinheit für die Bedienung einer Benutzeroberfläche einer elektrischen Vorrichtung bekannt, bei der ein um eine Drehachse drehbarer Drehkörper in Bezug auf diese Drehachse verkippbar ist. Benachbart zu dem Drehkörper ist ein Taster vorgesehen, der eine zusätzliche Eingabefunktion ermöglicht.

### Vorteile der Erfindung

Die erfmdungsgemäße Bedieneinrichtung mit einem an einer Drehachse gelagerten Bedienrad hat demgegenüber den Vorteil, dass neben einem Verkippen und einem Drehen des Bedienrades eine weitere Eingabemöglichkeit geschaffen wird, indem ein senkrecht zu der Drehachse auf das Bedienrad wirkender Druck ebenfalls detektiert wird. Hierdurch können die Bedienmöglichkeiten vereinfacht werden. Insbesondere ist für die zusätzliche Bedienung kein Umgreifen zur Bedienung eines Tasters erforderlich. Damit kann das Bedienrad über das Verkippen und das Verdrehen eine Menüpunktauswahl ermöglichen, während eine Bestätigung der Auswahl intuitiv durch einen senkrechten Druck, d.h. seitlich in Bezug auf die Drehachse auf das Bedienrad erfolgen kann.

Durch die in den Unteransprüchen aufgeführten Maßnahmen sind vorteilhafte Weiterbildungen und Verbesserungen der im Hauptanspruch angegebenen Bedieneinrichtung möglich. Besonders vorteilhaft ist es, das Bedienrad so zu lagern, dass die Drehachse durch den seitlichen Druck auf die Drehachse senkrecht zu der Achsenrichtung, d.h. radial, verschoben wird. Damit wird eine haptische Rückmeldung an einen Benutzer ermöglicht. Der Benutzer kann damit auf einfache Weise den Erfolg der von ihm vorgenommenen Maßnahme, nämlich den seitlichen Druck auf das Bedienrad, erfühlen.

Ferner ist es vorteilhaft, die Drehachse an beiden Seiten des Bedienrades zu lagern und in den Lagern Taster vorzusehen, die einen Druck senkrecht zu der Drehachse des Bedienrades besonders leicht erfassen können.

Vorteilhaft ist es ferner, eine Seitenkante des Bedienrades so anzuordnen, dass sie aus einer Oberfläche herausragt. Unter der Oberfläche können einerseits die Detektionsvorrichtungen für Bedienungen des Bedienrades geschützt werden, während andererseits die gesamte Funktionalität des Bedienrades von dem Benutzer über die Seitenkante des Bedienrades ausgeübt werden kann. Somit kann die Bedieneinrichtung platzsparend angeordnet werden.

Besonders vorteilhaft ist, die erfindungsgemäße Bedienvorrichtung für eine Fahrerinformationseinrichtung in einem Fahrzeug zu verwenden, da bei derartigen Fahrerinformationseinrichtungen zahlreiche Funktionen aufgerufen werden können, andererseits aber für die Bedieneinrichtung im allgemeinen nur ein recht begrenzter Platz zur Verfügung steht. Zudem ist mit einer erfindungsgemäßen Bedieneinrichtung eine intuitiv einfache Bedienung einer Fahrerinformationseinrichtung möglich, wodurch die Ablenkung für einen Fahrer verringert wird.

### Zeichnung

Ausführungsbeispiele der Erfindung sind in der Zeichnung dargestellt und in der nachfolgenden Beschreibung näher erläutert. Es zeigen
Figur 1 eine Fahrerinformationseinrichtung mit einer erfindungsgemäßen Bedieneinrichtung,
Figur 2 eine Seitenansicht einer erfindungsgemäßen Bedieneinrichtung aus einer Position radial zu der Drehachse,
Figuren 3 und 4 zwei Ausführungsbeispiele für eine Anordnung der Lager der Drehachse in einer Ansicht axial, d.h. parallel, zu der Drehachsenrichtung.
Figur 5 zeigt ein weiteres Ausführungsbeispiel für eine erfmdungsgemäße Bedieneinrichtung.

### Beschreibung des Ausführungsbeispiels

Es wird eine Bedieneinrichtung mit einem an einer Drehachse gelagerten Bedienrad vorgeschlagen, wobei durch ein Drehen des Bedienrades, ein Verkippen des Bedienrades und einen radialen Druck auf das Bedienrad drei verschiedene Eingaben möglich sind.

Die erfindungsgemäße Bedieneinrichtung kann für beliebige elektronische Geräte verwendet werden. Sie dient insbesondere dazu, aus einem angezeigten Menü einen Menüpunkt auszuwählen, gegebenenfalls in dem Menüpunkt einen Parameter zu verändern und anschließend die Auswahl zu betätigen. Im Folgenden ist die erfindungsgemäße Bedieneinrichtung am Beispiel einer Fahrerinformationseinrichtung in einem Kraftfahrzeug erläutert.

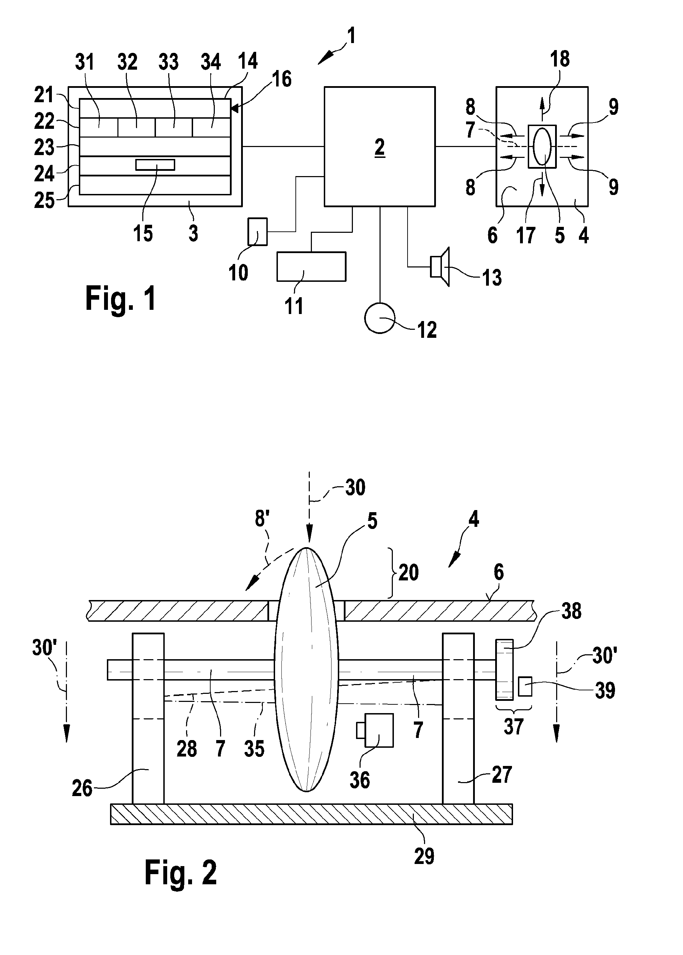

In der Figur 1 ist eine Fahrerinformationseinrichtung 1 gezeigt, die über eine Steuereinheit 2, eine Anzeige 3 und eine erfindungsgemäße Bedieneinrichtung 4 verfügt. Die Bedieneinrichtung ist z.B. an einem Gehäuse der Fahrerinformationseinrichtung angeordnet. Das Gehäuse ist bevorzugt fest eingebaut, z.B. in der Mittelkonsole des Fahrzeugs. Die Bedieneinrichtung 4 weist ein Bedienrad 5 auf, das mit seiner Seitenkante aus einer Gehäuseoberfläche 6 hervorragt. Das Bedienrad 5 ist um eine gestrichelt eingezeichnete Drehachse 7 drehbar, die unterhalb der Gehäuseoberfläche 6 verläuft. Das Bedienrad 5 kann ferner in Richtung der Pfeile 8 nach links und in Richtung der Pfeile 9 nach rechts verkippt werden. Ferner kann das Bedienrad 5 auch in das Gehäuse der Bedieneinrichtung 4 ein Stück hineingedrückt werden. Die Bedienungen des Bedienrades 5 werden von der Steuereinheit 2 erfasst. Die Steuereinheit 2 ist mit Sensoreinheiten 10, mit Stelleinrichtungen 11, mit einer Speichereinheit 12 und einer akustischen Ausgabeeinheit 13 im Fahrzeug verbunden. Bevorzugt weist die Steuereinheit 2 insbesondere eine Radio- und Musikwiedergabefunktion auf. Die Steuereinheit 2 kann stattdessen oder ergänzend eine Navigationsfunktion, eine Klimasteuerungsfunktion und/oder eine Fahrzeugbordcomputerfunktion aufweisen. Ferner können auch beliebige andere Systeme im Fahrzeug durch die Steuereinheit 2 gesteuert werden, wie z.B. eine Einstellung der Sitzposition oder ein Stellantrieb für die Fahrzeugfenster.

Entsprechend eingestellte Parameter und mögliche Bedienfunktionen werden in der Anzeige 3 dargestellt. In dem hier dargestellten Ausführungsbeispiel ist ein Bedienmenü dargestellt, das in der beispielhaft gezeigten Menüdarstellung 14 fünf Zeilen 21, 22, 23, 24, 25 aufweist. In der zweiten Zeile 22 sind vier Menüpunkte 31, 32, 33, 34 nebeneinander angeordnet dargestellt. In der vierten Zeile 24 ist ein Eingabefenster 15 vorgesehen. Eine aktuell angewählte Zeile wird durch eine Auswahlmarke 16 hervorgehoben. Eine Menüauswahl erfolgt nun in der Weise, dass durch eine Drehung des Bedienrades 5 in Pfeilrichtung 17 nach unten auch die Auswahlmarke 16 in der Anzeige 3 nach unten bewegt wird. Durch eine Drehung um die Drehachse 7 nach oben in Pfeilrichtung 18 wird die Auswahlmarke in der Anzeige 3 nach oben bewegt. Wird die Auswahlmarke vor der zweiten Zeile 22 positioniert, so kann durch ein Verkippen des Bedienrads nach links in Pfeilrichtung 8 einer der Menüpunkte 31, 32, 33, 34 hervorgehoben werden, z.B. durch eine inverse Darstellung. Ein Wechsel nach rechts unter den Menüpunkten 31, 32, 33, 34 kann durch ein Verkippen des Bedienrads in Pfeilrichtung 9 nach rechts erreicht werden. In der vierten Menüzeile 24 kann der Parameterwert in dem Eingabefenster 15, z.B. die Frequenz eines wiederzugebenden Senders, durch ein Verkippen des Bedienrads 5 in Pfeilrichtung 8 nach links verringert und durch ein Verkippen des Bedienrads 5 in Pfeilrichtung 9 nach rechts erhöht werden.

Ist eine Zeile in der Menüdarstellung 14 durch die Auswahlmarke 16 hervorgehoben, bzw. ist ein entsprechender Menüpunkt eingestellt worden oder ein Parameterwert verändert worden, so erfolgt die Ausführung eines dargestellten Befehls bzw. die Änderung eines dargestellten Parameters erst dann, wenn die Eingabe bestätigt wird. Hierzu wird von dem Benutzer auf das Bedienrad 5 ein Druck senkrecht, d.h. radial, zu der Drehachse 7 ausgeübt. In einer bevorzugten Ausführungsform ist das Bedienrad 5 dabei so gelagert, dass es in das Gehäuse der Bedieneinrichtung 4 hineinbewegt wird. Die Steuereinheit 2 erfasst den ausgeübten Druck und damit die Bestätigung. Die Steuereinheit 2 führt den zuvor ausgewählten Befehl aus bzw. ändert den Parameterwert. Z.B. werden ein gewünschtes Musikstück gespielt, ein gewünschter Sender eingestellt oder eine Fahrtroute zu einem ausgewählten Fahrziel berechnet.

In der Figur 2 ist eine seitliche Ansicht des Bedienrades 5 und seiner Lagerung innerhalb der Bedieneinrichtung 4 im Detail dargestellt. Eine Seitenkante 20 des Bedienrades ragt über die Oberfläche 6 der Bedieneinrichtung 4 heraus und kann in diesem Bereich von einem Benutzer berührt und bewegt werden. Das Bedienrad 5 ist bevorzugt aus einem Kunststoffmaterial, insbesondere einem Elastomer mit einer gut griffigen Oberfläche gefertigt, so dass ein Benutzer das Bedienrad 5 gut bewegen kann. Bevorzugt kann die Oberfläche des Bedienrades 5 auch aufgeraut werden. Das Bedienrad 5 ist mit der Drehachse 7 entweder einstückig ausgeführt oder mit der Drehachse 7 fest verbunden, z.B. durch Aufstecken oder Kleben. Die Drehachse 7 ist parallel zu der Oberfläche 6 gelagert. Das Bedienrad 5 ist dabei in einer bevorzugten Ausführungsform so ausgeführt, dass seine Ausdehnung senkrecht zu der Drehachse größer ist als seine Ausdehnung parallel zu der Drehachse. Gegebenenfalls sind aber auch andere Ausführungsformen möglich, bei denen das Bedienrad 5 in beide Richtungen eine gleiche oder sogar in eine Richtung entlang der Drehachse eine größere Ausführungsform als senkrecht hierzu hat, so dass es entweder kugelförmig oder ellipsenförmig ausgeführt ist.

Eine Drehung des Bedienrades 5 wird in einer ersten Ausführungsform über eine vorzugsweise optische Detektionseinheit 36 erfasst, die benachbart zu dem Bedienrad 5 angeordnet ist. In einer weiteren Ausführungsform kann auch an der Drehachse eine Detektionseinrichtung 37 mit einem Detektionsrad 38 und einem entsprechenden optischen, elektrischen oder mechanischen Detektor 39 vorgesehen sein.

Die Drehachse 7 ist an beiden Seiten des Bedienrads 5, aus dem sie ungefähr senkrecht hervorragt, in Halterungen 26, 27 eingeführt. Es ist eine linke Halterung 26 und eine rechte Halterung 27 vorgesehen. Beide Halterungen 26, 27 sind auf einer Halteplatte 29 angeordnet. Die Halteplatte 29 weist vorzugsweise nicht dargestellte elektrische Leitungen auf, über die die Halterungen 26, 27 und an den Halterungen angeordnete Detektionsvorrichtungen zur Detektion einer Bewegung und/oder eines Drucks auf die Drehachse und damit auch eine Bewegung des Bedienrad erfasst werden können. In den Halterungen 26, 27 ist die Drehachse 7 drehbar gelagert. Sie ist jedoch auch so gelagert, dass sie bei einem Verkippen des Bedienrads 5 nach links in Pfeilrichtung 8' (gestrichelter Pfeil) verkippt werden kann. Die Drehachse wird dabei derart bewegt, dass sie sich im Bereich der linken Halterung 26 von der Oberfläche 6 wegbewegt, während sie im Bereich der rechten Halterung 27 ungefähr den gleichen Abstand zur Oberfläche beibehält. Die Unterkante der Drehachse wird dabei auf die gestrichelt eingezeichnete Position 28 verschoben. Wird ein Druck senkrecht auf das Bedienrad 5 entsprechend der Pfeildarstellung 30 ausgeführt, überträgt sich dieser Druck über das Bedienrad 5 auf die Drehachse 7, so dass beide Enden der Drehachse in Richtung der Halteplatte 29 bewegt werden, entsprechend den Pfeilen 30'. Die Drehachse 7 wird mit ihrer unteren Kante parallel zu ihrem Verlauf in eine Position 35 mit einem größeren Abstand zu der Oberfläche 6 verschoben.

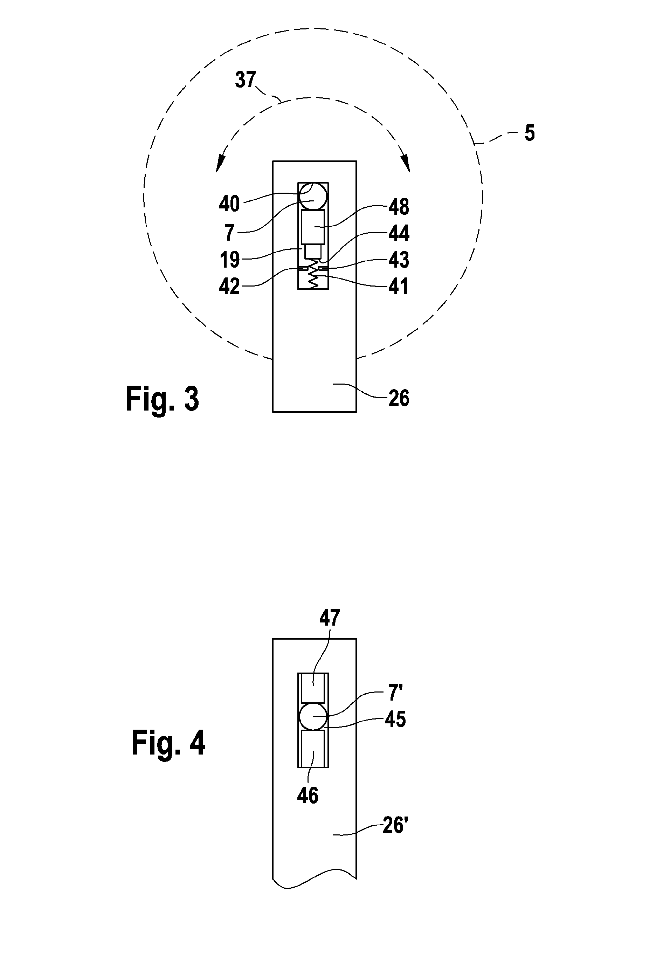

Eine Detektion eines Verkippens und einer axialen Verschiebung der Drehachse 7 erfolgt über die Halterung 26, 27. Ausführungsbeispiele hierfür sind in den Figuren 3 und 4 dargestellt.

In der Figur 3 ist eine Seitenansicht der ersten Halterung 26 gezeigt. Die rechte Halterung 27 ist entsprechend der ersten Halterung 26 ausgeführt.
Gestrichelt ist das Bedienrad 5 eingezeichnet, das um die Drehachse 7 in beide Richtungen entsprechend der Pfeildarstellung 37 gedreht werden kann. Die Drehachse 7 ist in einer Öffnung 19 gelagert, die in die Halterung 26 eingebracht ist. Die Drehachse 7 wird von einem Halteelement 48 gegen einen oberen Rand 40 in die Öffnung gedrückt. Das Halteelement 48 ist durch ein Federelement 41 vorgespannt. Wird nun eine Kraft auf die Drehachse 7 ausgeübt, die die Drehachse nach unten drückt, also von der Oberfläche 6 entfernt, entweder in die Position 28 oder 35, so wird die Drehachse 7 gegen die Federkraft bewegt, die auf das Halteelement 48 ausgeübt wird. Wird das Halteelement 48 um eine vorbestimmte Strecke hinuntergedrückt, so wird bevorzugt ein elektrischer Kontakt geschlossen. Dieser Kontakt kann z.B. dadurch geschlossen werden, dass eine Unterseite 44 des Halteelements 48 leitend ausgeführt ist, so dass zwischen einem ersten Anschluss 42 und einem zweiten Anschluss 43 ein elektrischer Kontakt geschlossen wird. Lässt die auf die Drehachse 7 wirkende Kraft nach, so sorgt die Federkraft des Federelements 41 dafür, dass die Drehachse 7 in ihre Ausgangslage an dem oberen Rand 40 der Öffnung 19 zurückbewegt wird und sich der elektrische Kontakt wieder öffnet.

Wird das Bedienrad 5 nach links verkippt, so löst nur der Kontakt in der linken Halterung 26 aus. Damit kann ein Verkippen des Bedienrads 5 nach links detektiert werden. Ebenso wird ein Verkippen des Bedienrades 5 nach rechts detektiert, wenn nur der Kontakt in der rechten Halterung 27 ausgelöst wird. Werden beide Kontakte in den Halterungen 26, 27 ungefähr gleichzeitig ausgelöst, so liegt ein Druck auf das Bedienrad senkrecht zu der Drehachse 7 in Pfeilrichtung 30 vor, so dass ein entsprechender radialer Druck auf das Bedienrad in Bezug auf die Drehachse detektiert werden kann.

In der Figur 4 ist eine weitere Ausführungsform mit einer Halterung 26' gezeigt, bei der in der Öffnung 45 sowohl ein Halteelement 46 von der Unterseite auf die Drehachse 7' einwirkt, als auch ein ebenfalls mit einer Federkraft vorgespanntes Halteelement 47 von der Oberseite auf die Drehachse 7' einwirkt. Eine Detektion erfolgt bevorzugt ebenfalls mit dem unteren Halteelement 46, wobei jedoch bei einem Verkippen der Drehachse 7 auf der gegenüberliegenden Seite der Drehachse die Drehachse nach oben bewegt wird, indem ein dem oberen Halteelement 47 entsprechendes Halteelement in der gegenüberliegenden Halterung nach oben verschoben wird. Gegebenenfalls kann eine Bewegung der oberen Halteelemente nach oben ebenfalls erfasst werden, so dass eine Erfassungsgenauigkeit für ein Verkippen der Drehachse 7' erhöht werden kann.

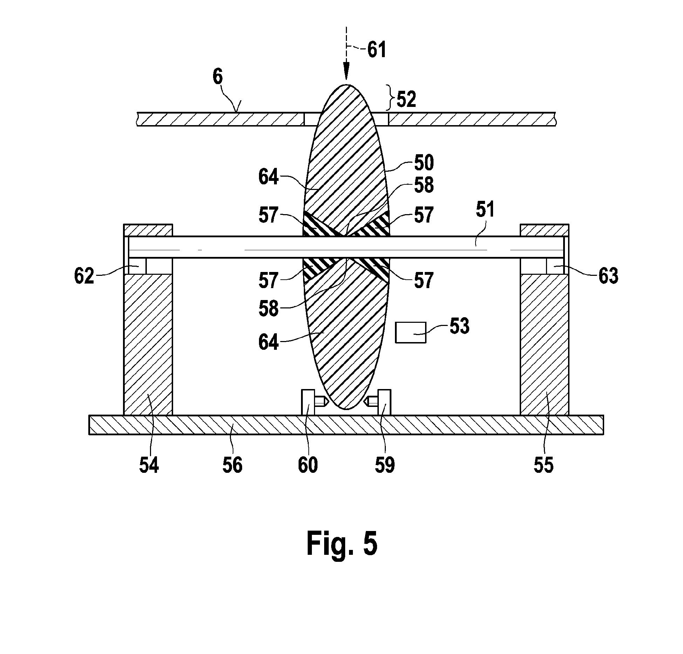

In der Figur 5 ist als eine weitere Ausführungsform ein Bedienrad 50 dargestellt, das drehbar an einer ansonsten im wesentlichen feststehenden Drehachse 51 angeordnet ist und um die Drehachse 51 herum gedreht werden kann. Das Bedienrad 50 ragt ebenfalls aus einer Oberfläche 6' in einem Bereich 52 heraus, so dass es von einem Benutzer berührt und entsprechend gedreht, verkippt und in eine Richtung senkrecht zu der Drehachse 51 bewegt werden kann. Eine Drehung des Bedienrades 50 wird durch eine hinter der Oberfläche 6 angeordnete, vorzugsweise optische Erfassungseinrichtung 53 erfasst. Die Drehachse 51 durchstößt das Bedienrad 50 und ist jeweils in einer linken Halterung 54 und in einer rechten Halterung 55 gelagert, die bevorzugt ebenfalls an einer Halteplatte 56 angeordnet sind. Das Bedienrad 50 ist in einem Hauptbereich 64 aus einem recht harten Kunststoffmaterial ausgeführt. Benachbart zu der Drehachse sind an der den Halterungen 54, 55 jeweils zuweisenden Bereichen unmittelbar benachbart zu der Drehachse zwei zueinander weisende kegelförmige, die Drehachse umgebende Bereiche 57 aus einem weichen, elastischen Material eingebracht. Das Bedienrad 50 kann nun nach links und nach rechts derart verkippt werden, dass dabei die Bereiche 57 entsprechend gestaucht und gedehnt werden können. Somit ist das Bedienrad 50 nach links und nach rechts an der Drehachse verkippbar. Bevorzugt sind die der linken Halterung 54, 55 zuweisenden weichen Bereiche 57 des Bedienrads 50 durch einen bevorzugt abgerundet ausgeführten Bereich 58 getrennt, in dem der harte Bereich 64 des Bedienrads 50 unmittelbar an die Drehachse 51 grenzt. Ein Verkippen des Bedienrads nach links wird dabei bevorzugt durch einen ersten, an der Halteplatte 56 angeordneten Schaltkontakt 59 und ein Verkippen des Bedienrads nach rechts durch einen zweiten Schaltkontakt 60 erfasst, der bevorzugt ebenfalls an der Halteplatte 56 angeordnet ist. Wird eine Kraft in Pfeilrichtung 61 senkrecht zu der Ausrichtung der Drehachse 51 auf das Bedienrad 50 ausgeübt, überträgt sich diese Kraft über den harten Bereich 64 des Bedienrades auf zwei Erfassungseinrichtungen 62, 63, die in der linken Halterung 54 bzw. der rechten Halterung 55 angeordnet sind. In einer ersten Ausführungsform sind die Erfassungseinrichtungen 62, 63 als mechanische Schalteinrichtungen ausgeführt, die eine axiale Verschiebung der Drehachse 51 erfassen. In einer weiteren Ausführungsform können die Erfassungseinrichtungen 62, 63 aber auch als Drucksensoren ausgeführt sein, die einen Druck auf die Drehachse 51 erfassen. Einen Druck senkrecht auf das Bedienrad 50 liegt dann vor, wenn beide Erfassungseinrichtungen 62, 63 einen entsprechenden Druck bzw. eine Verschiebung der Drehachse erfassen.

## Patentansprüche

1. Bedieneinrichtung mit einem an einer Drehachse (7) gelagerten Bedienrad (5), wobei eine erste Eingabe durch eine Drehung des Bedienrades (5) erfolgt, wobei eine zweite Eingabe durch ein Verkippen des Bedienrades (5) erfolgt, **dadurch gekennzeichnet, dass** eine dritte Eingabe durch einen radial zu der Drehachse (7) gerichteten Druck auf das Bedienrad (5) erfolgt.

2. Bedieneinrichtung nach Anspruch 1, **dadurch gekennzeichnet, dass** die Drehachse (7) bei einem radialen Druck auf das Bedienrad (5) radial verschoben wird.

3. Bedieneinrichtung nach Anspruch 2, **dadurch gekennzeichnet, dass** die Drehachse (7) federnd gelagert ist.

4. Bedieneinrichtung nach einem der vorherigen Ansprüche, **dadurch gekennzeichnet, dass** das Bedienrad (50) einen elastischen Bereich (57) zur verkippbaren Lagerung des Bedienrades (50) an der Drehachse (51) aufweist.

5. Bedieneinrichtung nach einem der vorherigen Ansprüche, **gekennzeichnet durch** beidseitig des Bedienrads angeordnete Lager (26, 27, 46, 47) der Drehachse (7) und **durch** an beiden Lagern angeordnete Tastschalter, wobei beide Tastschalter bei einem radial zu der Drehachse (7) gerichteten Druck betätigt werden.

6. Bedieneinrichtung nach Anspruch 5, **dadurch gekennzeichnet, dass** die Lager an Halterungen angeordnet sind, die auf einer Leiterplatte (29) montiert sind.

7. Bedieneinrichtung nach einem der vorherigen Ansprüche, **gekennzeichnet durch** eine Gehäuseoberfläche (6) mit einer Öffnung zur Aufnahme einer Seitenkante des Bedienrades (5).

8. Verwendung einer Bedieneinrichtung nach einem der vorherigen Ansprüche für eine Menüsteuerung, insbesondere für eine Fahrerinformationseinrichtung in einem Fahrzeug.
